# EUROPÄISCHE PATENTSCHRIFT

(11) **EP 1 767 384 B1**
(45) Veröffentlichungstag und Bekanntmachung des Hinweises auf die Patenterteilung: **09.11.2011**
(21) Anmeldenummer: 06019417.2
(22) Anmeldetag: 16.09.2006
(51) Int. Cl.: B60C 23/04

(54) **Verfahren zur Temperaturkompensation von Druckmesswerten in einem Reifendruckkontrollsystem**
Temperature compensation method for pressure measurements in a tyre pressure control system
Méthode pour la compensation en température des mesures de pression dans un système de surveillance de pression des pneumatiques

(30) Priorität: 24.09.2005 DE 102005045687
(43) Veröffentlichungstag der Anmeldung: 28.03.2007
(73) Patentinhaber: BorgWarner BERU Systems GmbH, 71636 Ludwigsburg (DE)
(72) Erfinder: Häfele, Ulrich, 75038 Oberderdingen (DE); Dennig, Michael, 76571 Gaggenau (DE)
(74) Vertreter: Twelmeier Mommer & Partner

(56) Entgegenhaltungen:
- EP-A- 1 384 604
- WO-A-03/074299
- DE-A1- 3 539 489
- DE-A1- 3 835 236
- DE-A1-102004 040 756
- DE-T2- 69 717 697

## Beschreibung

Die Erfindung geht aus von einem Verfahren mit den im Oberbegriff des Anspruchs 1 angegebenen Merkmalen. Ein Reifendruckkontrollsystem, bei dem ein solches Verfahren durchgeführt wird, ist aus der WO 03/074299 A1 bekannt. Das bekannte Verfahren befasst sich mit dem Problem, dass ein Temperatursensor eines Reifendruckkontrollsystems aufgrund von äußeren Einflüssen, wie zum Beispiel einer heißen Bremsscheibe, nicht die tatsächliche Gastemperatur in dem Reifen, sondern eine davon abweichende Temperatur anzeigt. Um in solchen Fällen trotzdem die in dem Reifen enthaltene Luftmenge möglichst genau zu bestimmen, wird bei dem bekannten Verfahren durch Betrachtung der zeitlichen Änderung des Verlaufs der Temperatur die voraussichtliche Endtemperatur abgeschätzt und die in dem Reifen enthaltene Luftmenge unter Verwendung der geschätzten Endtemperatur berechnet.

Mit dem Problem, dass die tatsächliche Temperatur der Luft in einem Reifen von der von einem Temperatursensor eines Reifendruckkontrollsystems gemessenen Temperatur abweicht, befasst sich auch die DE 38 35 236 A1. Bei dem darin beschriebenen Verfahren werden die Temperaturmesswerte eines Sensors mit fahrzeugspezifischen festen Korrekturparametern korrigiert. Dabei kann ein systematischer Einfluss einer nassen Fahrbahn durch einen zweiten Satz von Korrekturparametern berücksichtigt werden, so dass bei trockener Fahrbahn ein erster Satz Korrekturparameter und bei nasser Fahrbahn ein zweiter Satz Korrekturparameter verwendet wird.

Ein weiteres Reifendruckkontrollsystem, in welchem ein solches Verfahren durchgeführt wird, ist aus dem in der Sonderausgabe "System Partners" der DE-Z/ATZ/MTZ des Jahres 2003 erschienenen Artikel "Das Reifendruck-Kontrollsystem TSS, jetzt auch für NKW" bekannt, welcher ein solches Reifendruckkontrollsystem für den Einsatz in Nutzfahrzeugen beschreibt. Für jeden Reifen des Fahrzeugs ist eine batteriegespeiste Radelektronik im Inneren des Reifens vorgesehen, welche einen Drucksensor und einen Temperatursensor enthält und in kurzen Intervallen Druck und Temperatur im Reifen mißt. Zusammen mit einer individuellen Kennung der Radelektronik werden die Messwerte in Datentelegrammen per Funk an einen Empfänger gesandt, welcher sie in ein elektrisches Signal umformt und zur Auswertung an ein zentrales Steuergerät im Fahrzeug weiterleitet. Das Steuergerät wertet die Datentelegramme aus, erkennt den Absender und entscheidet, ob der Fahrer informiert werden muss oder nicht.

Überwacht wird jedes Rad getrennt. Dabei wird der Luftdruck im Reifen anhand der gleichzeitig gemessenen Temperatur kompensiert, d. h., auf einen Druck bei einer Referenztemperatur von z. B. 20°C umgerechnet. Der Sollwert des Reifendrucks wird vom Fahrer durch Tastendruck oder werksseitig als fahrzeugspezifischer Solldruck im Steuergerät vorgegeben, wobei eine Prüfung auf Plausibilität und permanente Überwachung mögliche Einstellfehler des Fahrers verhindert.

Ein "Reifenplatzer" folgt meist unmittelbar auf einen schnellen Druckverlust von z. B. mehr als 0,4 bar pro Minute. Sobald der schnelle Druckverlust einsetzt, erscheint eine "harte" Warnung in einem Display der Instrumententafel des Fahrzeuges. Bei einem langsamen, schleichenden Druckverlust erhält der Fahrer eine "weiche" Warnung; er wird gemahnt, bei nächster Gelegenheit den Reifendruck zu erhöhen. Die Mahnung erfolgt erstmals, wenn der Fülldruck im Reifen z. B. 0,7 bar unter dem Solldruck liegt. Unterschreitet der Fülldruck eine zweite Schwelle, welche z.B. bei 1,2 bar unter dem Solldruck liegen kann, dann erhält der Fahrer ebenfalls eine "harte" Warnung. Bei einer harten Warnung soll der Reifendruck schnellstens korrigiert bzw. ein schadhafter Reifen ausgewechselt werden.

Eine zuverlässige Temperaturkompensation der Druckmesswerte setzt voraus, dass man die Temperatur der Luft im Reifen hinreichend zuverlässig kennt. Der Temperatursensor der Radelektronik mißt seine eigene Temperatur, und die sollte möglichst mit der Lufttemperatur im Reifen übereinstimmen. Bei herkömmlichen Reifen ist das in der Regel der Fall, weil durch das Walken des Reifens während der Fahrt im Reifen eine Luftströmung auftritt, die geeignet ist, einen Temperaturausgleich herbeizuführen. Das ist jedoch nicht mehr gewährleistet bei modernen Reifen mit integriertem Notlaufelement, welches zwischen dem Reifen und der Felge angeordnet ist und im Falle eines starken Druckverlustes noch für eine begrenzte Zeit und mit begrenzter Geschwindigkeit einen Notlauf des Rades ermöglichen soll.

Da die Radelektronik üblicherweise auf dem Felgenbett angeordnet wird, ist sie durch das Notlaufelement weitgehend vom Luftvolumen im Reifen abgeschirmt. Das Notlaufelement behindert die Zirkulation der Luft im Reifen und behindert infolgedessen auch einen Temperaturausgleich im Luftraum unter dem Reifen. Um dem zu begegnen, sind bereits Notlaufelemente mit Spülkanälen bekannt, die beim Walken des Reifens die Luftströmung und damit den Temperaturausgleich erleichtern sollen. Dennoch bleibt das Notlaufelement ein Hindernis für die Luftbewegung und für einen Temperaturausgleich im Reifen. So hat es sich gezeigt, dass die während der Fahrt auftretende Temperaturerhöhung im Reifen infolge der Wärmeleitfähigkeit der Felge, welche besser ist als die Wärmeleitfähigkeit des Reifens, unterhalb des Notlaufelementes niedriger ausfällt als oberhalb des Notlaufelementes, was besonders bei Aluminium-Felgen spürbar ist, welche eine wesentlich bessere Wärmeleitfähigkeit haben als Stahlfelgen. Ein zwischen dem Notlaufelement und der Felge sitzender Temperatursensor neigt deshalb dazu, eine Temperatur zu messen, welche niedriger ist als die mittlere Lufttemperatur im Reifen. Das führt zu einer ungenauen Temperaturkompensation der Druckmesswerte und in weiterer Folge zu einer unerwünschten Aufweitung der Warnschwellen des Reifendruckkontrollsystems.

Der vorliegenden Erfindung liegt die Aufgabe zugrunde, einen Weg aufzuzeigen, wie bei Rädern, in deren Luftkammer mit einer ungleichmäßigen Temperaturverteilung zu rechnen ist, insbesondere bei Reifen mit integriertem Notlaufelement, die Temperaturkompensation der Druckmesswerte auf möglichst einfache Weise verbessert werden kann.

Diese Aufgabe wird gelöst durch ein Verfahren mit den im Anspruch 1 angegebenen Merkmalen. Vorteilhafte Weiterbildungen der Erfindung sind Gegenstand der Unteransprüche.

Es wird bei den aktuell im Reifen gemessenen Temperaturen eine Abweichung der Temperatur des Temperatursensors von der mittleren Lufttemperatur im Reifen abgeschätzt. Mit der abgeschätzten Temperaturabweichung als Korrekturwert werden die aktuellen Temperaturmesswerte korrigiert und dann auf der Grundlage der korrigierten Temperaturmesswerte die Temperaturkompensation der aktuellen Druckmesswerte vorgenommen.

Dies hat den Vorteil, dass bereits im Wege einer Abschätzung, die im einfachsten Falle nach Erfahrungswerten vorgenommen werden kann, eine Verbesserung der Temperaturkompensation der Druckmesswerte möglich wird. Das verbessert nicht nur die Genauigkeit und Zuverlässigkeit der Drucküberwachung, insbesondere bei Reifen mit integriertem Notlaufelement, sondern macht sie bei Reifen mit integriertem Notlaufelement auf Aluminiumfelgen überhaupt erst möglich, insbesondere bei modernen Superbreitreifen, bei denen das Notlaufelement einen Temperaturausgleich im Reifen in besonderem Maße behindert.

Erfindungsgemäß wird der Korrekturwert der Temperatur nicht aus Erfahrungswerten gewonnen, sondern laufend aus der Entwicklung der Druckmesswerte und der Temperaturmesswerte im Fahrbetrieb abgeleitet. Dabei wird die Entwicklung der Druckmesswerte und der Temperaturmesswerte beobachtet, wenn die Räder des Fahrzeuges aus einem Zustand der Ruhe und des thermischen Gleichgewichtes heraus in einen Fahrzustand überführt werden, in welchem die Druckmesswerte und die Temperaturmesswerte mit einer vorgegebenen Referenz-Isochore für den Reifendruck des betreffenden Rades verglichen werden. Eine Isochore gibt für ein Gas wie z. B. Luft die Abhängigkeit des Drucks von der Temperatur bei konstant angenommenem Volumen an und ist eine Gerade, die am absoluten Nullpunkt der Temperatur mit dem Druck Null beginnt.

Die Erfindung hat den Vorteil, dass, obwohl die Lufttemperatur im Reifen nur an einer Stelle gemessen wird, durch die gleichzeitige Beobachtung der Entwicklung der Temperaturmesswerte und der Druckmesswerte unter Berücksichtigung der Gasgesetze ein brauchbarer Korrekturwert für den jeweiligen Temperaturmesswert gewonnen werden kann. Die Erfindung macht es sich zunutze, dass während der Fahrt der auf eine Referenztemperatur normierte Reifendruck nicht über den einmal eingestellten Solldruck hinaus steigen kann. Zeigen die Messungen des Drucksensors und des Temperatursensors jedoch Druckwerte an, die über der Referenz-Isochore liegen, welche z. B. den Reifensolldruck repräsentiert, dann kann man daraus schließen, dass nicht der gemessene Druck zu hoch, sondern die gemessene Temperatur zu niedrig ist. Das Ausmaß, um welches die gemessenen Temperatur zu niedrig ist, kann man abschätzen, indem man auf der Referenz-Isochore den Punkt mit dem gemessenen Reifendruck aufsucht und die dazugehörige Temperatur abliest. Die sich daraus ergebende Temperaturdifferenz schlägt man erfindungsgemäß dem Temperaturmesswert zu und erhält damit eine korrigierte Temperatur, welche in guter Näherung der mittleren Temperatur der Luft im Reifen entspricht und - von hier an in bekannter Weise - für eine Temperaturkompensation des Druckmesswertes herangezogen werden kann, um diesen auf die Referenztemperatur, z. B. auf 20°C, zu normieren. So erhält man alleine aus der gemeinsamen Auswertung der Druck- und Temperaturmesswerte auf der Grundlage einer Referenz-Isochore für den Reifendruck des betreffenden Rades eine gute Temperaturkompensation der Druckmesswerte auch in Rädern, in denen man im Luftraum des Reifens mit Temperaturgradienten rechnen muss.

Aus der vorstehenden Erläuterung wird deutlich, dass es vorteilhaft ist, die Korrekturwerte der Temperatur von dem Abstand der Druckmesswerte von der Referenz-Isochore abzuleiten. Wenn am Einbauort des Temperatursensors Temperaturmesswerte zu erwarten sind, die unter der mittleren Lufttemperatur im Reifen liegen, wie es der Fall ist, wenn der Temperatursensor in einem Reifen mit integriertem Notlaufelement zwischen dem Notlaufelement und der Felge angeordnet ist, welche eine Wärmesenke bildet, dann werden die Korrekturwerte der Temperaturmesswerte von der Abweichung der Druckmesswerte von der Referenz-Isochore nach oben hin abgeleitet.

Wenn im Reifen bei der Referenztemperatur ein vorgegebener Solldruck herrscht, wird zweckmäßigerweise eine Soll-Isochore festgelegt, welche bei der Referenztemperatur den Solldruck angibt. Nach dem Einstellen des Solldrucks im Reifen wird die Soll-Isochore zweckmäßigerweise als Referenz-Isochore für die Ermittlung der Korrekturwerte der Temperaturmesswerte im Reifen ausgewählt.

Reifen zeigen einen schleichenden Druckverlust. Dessen Rate hängt vom Aufbau und Material des Reifens und von der Dichtheit des Ventils ab und kann von Rad zu Rad unterschiedlich sein. Ein solcher schleichender Druckverlust muss vom Reifendruckkontrollsystem zuverlässig erfaßt werden können. Deshalb wird die Referenz-Isochore die im Reifendruckkontrollsystem für das jeweilige Rad vorzugsweise jedes mal aktualisiert, wenn das Fahrzeug nach einem Stillstand, in welchem sich die Temperatur im Reifen ausgleichen konnte, so dass es sich im thermischen Gleichgewicht befindet, erneut gestartet wird. Damit bleibt trotz allmählichen Druckverlustes die Genauigkeit der Temperaturkompensation der laufenden Druckmesswerte erhalten.

Es ist deshalb vorteilhaft, wenn die Räder des Fahrzeuges nach einer Fahrt wieder in einen Zustand thermischen Gleichgewichts gelangt sind, bei einem erneuten Start des Fahrzeuges eine Hilfs-Isochore dann zu bilden, wenn ein oder mehrere im Zustand des thermischen Gleichgewichtes gewonnene Druckmesswerte eines Rades unterhalb der bisher verwendeten Referenz-Isochore liegen. Die Hilfs-Isochore wird so gewählt, dass der eine oder die mehreren Druckmesswerte, welche im Zustand des thermischen Gleichgewichtes gewonnen wurden, auf der Hilfs-Isochore liegen. Die Hilfs-Isochore wird anschließend als neue Referenz-Isochore verwendet. Zweckmäßigerweise ersetzt sie die bisherige Referenz-Isochore. Die Soll-Isochore, welche anfänglich als Referenz-Isochore verwendet werden kann, soll jedoch nicht durch eine Hilfs-Isochore ersetzt, sondern erhalten bleiben, denn sie wird mit Vorteil dazu verwendet, um den aktuellen Luftdruck mit dem Solldruck zu vergleichen und bei Überschreiten eines Grenzwertes der Abweichung zwischen dem aktuellen Druck und dem Solldruck den Fahrer zu warnen. Ein geeigneter Grenzwert liegt bei Nutzfahrzeugen bei 300 mbar bis 400 mbar, bei Pkws bei 200 mbar bis 300 mbar. Vorzugsweise wird die Soll-Isochore nur dann neu berechnet, wenn der Fahrer einen neuen Reifendruck einstellt und im zentralen Steuergerät des Reifendruckkontrollsystems eine Kalibrierung veranlaßt, bei welcher im Steuergerät auf der Grundlage des neu eingestellten Reifendrucks (Reifensolldruck) die Soll-Isochore neu berechnet wird.

Werden bei einem Rad, welches sich im thermischen Gleichgewicht befindet, im Stillstand ein oder mehrere Druckmesswerte gewonnen, deren Abstand von der Soll-Isochore nach oben hin einen vorgegebenen Grenzwert überschreitet, wird der Fahrer aufgefordert, neu zu kalibrieren. Mittels der Kalibrierung wird die bisherige Soll-Isochore durch eine neue Soll-Isochore ersetzt. Ein solcher Anstieg des Reifendruckes kann nämlich als ein Nachfüllvorgang am Reifen interpretiert werden, durch den ein neuer Solldruck eingestellt werden soll, z. B. für eine stärkere Beladung des Fahrzeuges.

Als Korrekturwert der Temperatur wird vorzugsweise die Abweichung des Temperaturmesswertes von jener Temperatur gewählt, welche sich für jenen Druckmesswert, welcher zum gleichzeitig gewonnenen Temperaturmesswert gehört, aus der Referenz-Isochore ergibt. Diese Korrektur der Temperaturmesswerte ist einfach durchzuführen und führt zu einem gut brauchbaren Ergebnis.

Die Korrekturwerte der Temperatur werden jeweils während der Fahrt gewonnen. Beginnend mit dem Start des Fahrzeuges, festgestellt insbesondere durch Einschalten der Zündung, werden Druckmesswerte und Temperaturmesswerte vorzugsweise regelmäßig gewonnen und entsprechend regelmäßig auch neue Korrekturwerte der Temperatur gebildet, solange die Abstände der Druckmesswerte von der Referenz-Isochore größer werden. Werden sie nicht mehr größer, sondern bleiben sie gleich groß oder fallen sie sogar einmal ab, dann wird für die weiteren Messungen der letzte Korrekturwert der Temperatur beibehalten, der gewonnen wurde, bevor ein weiterer Anstieg des Korrekturwertes nicht mehr festgestellt werden konnte. Dadurch läßt sich sicherstellen, dass ein schleichender Druckverlust durch die Bildung der Korrekturwerte der Temperatur nicht wegkompensiert wird. Bei einem erneuten Ansteigen der Abweichung der Temperaturmesswerte von der Referenz-Isochore wird ein neuer Korrekturwert für die Temperatur jedoch vorzugsweise erst dann wieder gebildet, wenn sich der Anstieg des Abstandes der Druckmesswerte von der Referenzlsochore über eine vorgegebene Anzahl von aufeinanderfolgenden Messungen, vorzugsweise bei wenigstens drei aufeinanderfolgenden Messungen, fortsetzt und/oder wenn der Anstieg der Abweichung der Druckmesswerte von der Referenz-Isochore ein vorgegebenes Ausmaß, z. B. 150 mbar übersteigt. Dadurch kann verhindert werden, dass zufällige, kurzzeitige Druckschwankungen die Temperaturkompensation der Druckmesswerte verfälschen.

Ferner ist es vorteilhaft, die Korrekturwerte der Temperatur auf einen vorgegebenen Wertebereich zu beschränken, insbesondere nach oben hin, denn es hat sich gezeigt, dass mit zunehmendem Korrekturwert die Genauigkeit der Temperatur abnimmt, so dass zu hohe Korrekturwerte keinen Gewinn an Genauigkeit mehr bringen. Eine obere Grenze von 15°C wird für Reifen mit integriertem Notlaufelement auf Aluminiumfelgen bevorzugt. Für Reifen mit integriertem Notlaufelement auf Stahlfelgen wird eine obere Temperaturgrenze von 10 °C bevorzugt.

Sinnvoll ist auch eine Beschränkung für den Korrekturwert der Temperatur nach unten hin. Eine untere Grenze von 2°C bis 3°C wird für den Korrekturwert der Temperatur bevorzugt. Kleinere Korrekturwerte bringen keinen wesentlichen Gewinn an Genauigkeit und Sicherheit.

Als Referenz-Isochore nimmt man nach dem Einstellen des Reifensolldrucks zweckmäßigerweise zunächst einmal die durch den Reifensolldruck bestimmte Soll-Isochore. Um nach einem allmählichen Druckabfall im Reifen eine neue Referenz-Isochore festlegen zu können, muss der Reifendruck wenigstens einmal gemessen werden, wenn sich das Rad im thermischen Gleichgewicht befindet, d. h., dass ein Temperaturausgleich stattgefunden hat, so dass der Temperaturmesswert ziemlich genau die Temperatur der Luft im Reifen angibt. Nun kann man in der Praxis an den Fahrzeugrädern mit vertretbarem Aufwand nicht messen, ob der Temperaturausgleich stattgefunden hat und sich das Rad im thermischen Gleichgewicht befindet. Für Zwecke der Erfindung wird deshalb vorzugsweise vereinfachend angenommen, dass sich ein Rad in einem thermischen Gleichgewicht befindet, wenn die Zündung des Fahrzeuges länger als eine vorgegebene Zeitspanne, insbesondere länger als 30 Minuten ausgeschaltet ist und/oder der Temperaturmesswert einen vorgegebenen Grenzwert unterschreitet, insbesondere einen Grenzwert von 35°C unterschreitet, wobei die beiden Bedingungen vorzugsweise kumulativ erfüllt sein sollen. Etwaige Ungleichmäßigkeiten in der Temperaturverteilung, die dann noch vorhanden sein mögen, wären hinnehmbar.

Noch günstiger ist es, vereinfachend anzunehmen, dass sich ein Rad in einem thermischen Gleichgewicht befindet, wenn die Zündung des Fahrzeuges länger als eine vorgegebene Zeitspanne ausgeschaltet ist und/oder der Abstand der im Reifen gemessenen Temperatur von der außerhalb des Reifens herrschenden Temperatur der Luft eine vorgegebene Schwelle, vorzugsweise eine Temperaturschwelle von 10°C unterschreitet. Dieses Verfahren hat den Vorzug, dass die Genauigkeit der Temperaturkompensation nicht von der Umgebungstemperatur abhängt, weil diese gesondert gemessen wird. Dafür ist im Allgemeinen kein besonderer Aufwand erforderlich, da Fahrzeuge heute regelmäßig einen Außenlufttemperaturfühler aufweisen. Hat das Fahrzeug wenigstens 30 Minuten mit ausgeschalteter Zündung gestanden und beträgt die Differenz zwischen der Temperatur des Temperatursensors in der Radelektronik und der Temperatur des Außenluftfühlers nicht mehr als 10°C, dann kann im Rad allenfalls noch ein unbedeutender Temperaturgradient vorliegen, der für die Temperaturkompensation der Druckmesswerte vernachlässigbar ist.

Als Referenz-Temperatur, auf welchen die Druckmesswerte durch die Temperaturkompensation normiert werden, kann eine feste Temperatur verwendet werden, z. B. 20°C, aber auch der Messwert des Außenlufttemperaturfühlers, welcher gewonnen wird, während sich die Räder des Fahrzeuges im thermischen Gleichgewicht befinden.

### In den Zeichnungen ist

- Figur 1: ein Fließdiagramm für ein Ausführungsbeispiel einer erfindungsgemäßen Temperaturkompensation von Druckmesswerten,
- Figur 2: ein Fließdiagramm eines Verfahrens zur Ermittlung einer neuen Hilfs-Isochore, und
- Figur 3: ein Fließdiagramm des Ablaufs einer Temperaturkompensation von Druckmesswerten.

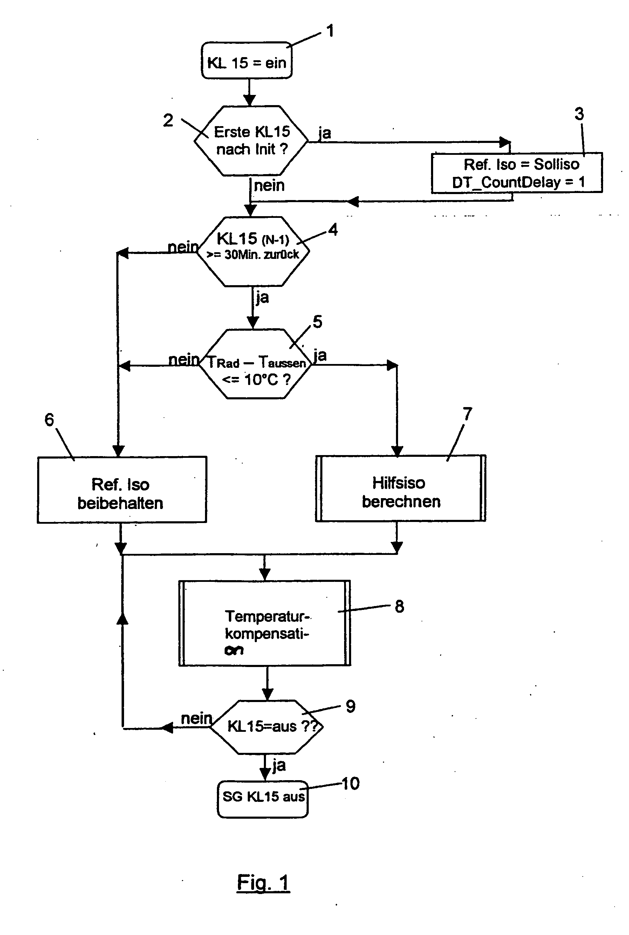

Bei der Temperaturkompensation gemäß Figur 1 ist vorausgesetzt, dass im zentralen Steuergerät des Reifendruckkontrollsystems bereits eine den Reifensolldruck wiedergebende Soll-Isochore abgelegt ist. Das Verfahren beginnt damit, dass die Zündung - Klemme 15 - eingeschaltet wird, siehe Feld 1. Danach wird überprüft, ob es sich nach dem Initialisieren des zentralen Steuergerätes um das erstmalige Einschalten der Zündung handelt. Ist das der Fall, dann liegt im Steuergerät bisher nur die den Reifensolldruck repräsentierende Soll-Isochore vor, welche als Referenz-Isochore ausgewählt wird. Zugleich wird für einen Zähler im Steuergerät, welcher eine Zeitverzögerung bestimmt, mit welcher bei ansteigender Abweichung der Druckmesswerte von der Referenz-Isochore (nachfolgend als Druckoffset bezeichnet) der davon abgeleitete Korrekturwert für die Temperatur übernommen wird, ein vorgegebener Initialwert übernommen, siehe Feld 3.

Handelte es sich nicht um das erste Einschalten der Zündung nach der Initialisierung des Steuergerätes, wird abgefragt, ob das letzte Ausschalten der Zündung mindestens 30 Minuten zurückliegt, siehe Feld 4. Ist das nicht der Fall, wird die im Steuergerät vorhandene Referenz-Isochore beibehalten, siehe Feld 6. Liegt jedoch das letzte Ausschalten der Zündung 30 Minuten oder mehr zurück, wird als nächstes gefragt - siehe Feld 5 - ob der Unterschied zwischen der Temperaturanzeige des Temperatursensors im Rad und der Temperaturanzeige des Außentemperaturfühlers nicht mehr als 10°C beträgt. Ist das nicht der Fall, wird die Referenz-Isochore beibehalten, siehe Feld 6; ist es jedoch der Fall, wird eine Hilfs-Isochore berechnet, siehe Feld 7, welche durch den bei der gemessenen Temperatur gewonnenen Druckmesswert geht. Mit dieser neu berechneten Hilfs-Isochore als neuer Referenz-Isochore wird dann die Temperaturkompensation durchgeführt, siehe Feld 8, bis die Zündung ausgeschaltet wird, siehe Feld 9, und auch das Steuergerät ausgeschaltet wird, siehe Feld 10, in welchem die zuletzt benutzte Referenz-Isochore erhalten bleibt.

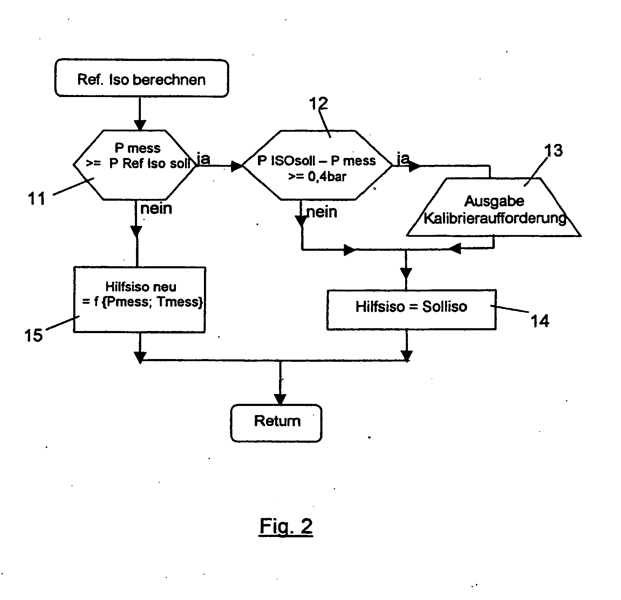

In Figur 2 ist das Verfahren zur Ermittlung einer neuen Hilfs-Isochore detaillierter dargestellt. Im ersten Schritt wird abgefragt, ob der aktuelle Druckmesswert oberhalb oder auf der zuletzt benutzten Referenz-Isochore liegt. Ist dies der Fall, kann davon ausgegangen werden, dass seit dem letzten Abschalten der Zündung kein Luftverlust eingetreten ist und die zuletzt benutzte Referenz-Isochore weiterhin als Referenz für die Temperaturkompensation herangezogen werden kann, siehe Feld 11.

Liegt der Druckmesswert mehr als 400 mbar über der Referenz-Isochore, siehe Feld 12, muss davon ausgegangen werden, dass Luft nachgefüllt wurde. In diesem Fall wird der Fahrer aufgefordert, siehe Feld 13, das entsprechende Rad oder die Räder auf der entsprechenden Achse neu zu kalibrieren, um für sie eine dem neuen Solldruck entsprechende Soll-Isochore im Steuergerät abzulegen. Sowohl im Fall, dass Luft nachgefüllt wurde, als auch im Fall, dass keine Luft nachgefüllt wurde, wird die zuletzt benutzte Referenz-Isochore beibehalten, siehe Feld 14. Mit der Kalibrierung wird die Referenz-Isochore der durch die Kalibrierung neu gebildeten Soll-Isochore gleich gesetzt.

Ergibt der Vergleich des aktuellen Druckmesswertes mit der zuletzt benutzten Referenz-Isochore jedoch, dass der aktuelle Druckmesswert unterhalb der Referenz-Isochore liegt, so wird eine Hilfs-Isochore berechnet, welche durch den bei der gemessenen Temperatur gemessenen Luftdruck bestimmt ist, siehe Feld 15, und anstelle der bisherigen Referenz-Isochore als neue Referenz-Isochore verwendet.

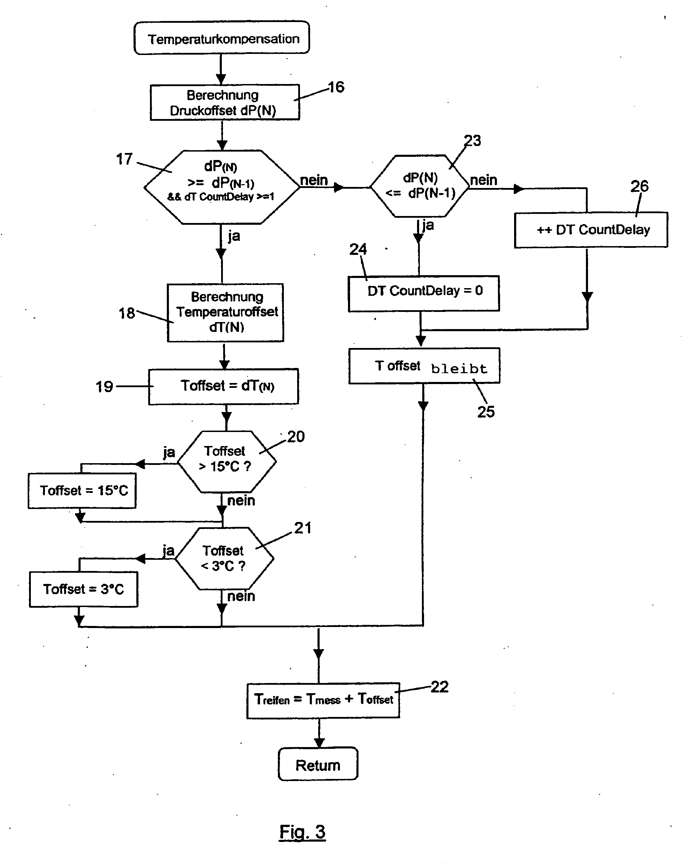

Der Ablauf der Temperaturkompensation der Druckmesswerte ist beispielhaft in Figur 3 dargestellt. Nach Aufrufen der Temperaturkompensation wird im ersten Schritt der Druckoffset des Druckmesswertes zur Referenz-Isochore berechnet, siehe Feld 16.

Im nächsten Schritt wird überprüft, ob der Druckoffset größer ist als der Druckoffset des zeitlich zuletzt davor empfangenen Druckmesswertes und ob auch schon ein Flag für die Verzögerung der Übernahme des Korrekturwertes für die Temperatur dieses Rades gesetzt ist (siehe Feld 17). Sind beide Bedingungen erfüllt, wird der Korrekturwert für die Temperatur, der zum aktuellen Druckmesswert gehört, berechnet - siehe Feld 18 - und für dieses Rad im zentralen Steuergerät abgespeichert - Siehe Feld 19 -. Anschließend erfolgt noch eine Überprüfung, ob sich der Korrekturwert für die Temperatur zwischen den vorgegebenen Grenzen von 15°C, siehe Feld 20, und 3°C, siehe Feld 21, befindet. Ist das nicht der Fall, wird der Korrekturwert für die Temperatur auf den oberen Grenzwert bzw. auf den unteren Grenzwert beschränkt. Anschließend wird die gemessene Reifentemperatur Tmess um den Korrekturwert Toffset korrigiert, was eine korrigierte Reifentemperatur Treifen ergibt, siehe Feld 22.

Wird jedoch nach der Berechnung des Druckoffsets - Feld 16 - die anschließende Abfrage, ob der Druckoffset größer ist als der Druckoffset des zeitlich zuletzt vorher empfangenen Druckmesswertes und ob das Flag für die Verzögerung der Übernahme des Korrekturwertes für die Temperatur für dieses Rad auch schon gesetzt ist, mit nein beantwortet, so wird anschließend überprüft, ob der Druckoffset des aktuellen Messwertes kleiner ist als der Druckoffset des zeitlich vorangegangenen Messwertes, siehe Feld 23 . Ist dies der Fall, so wird das Flag für die Verzögerung der Übernahme des Temperaturkorrekturwertes zurückgesetzt, siehe Feld 24, und der Temperaturkorrekturwert bleibt auf dem alten Wert, siehe Feld 25. Ist der Druckoffset des aktuellen Druckmesswertes größer als der Druckoffset des vorangegangenen Druckmesswertes und das Flag für die Verzögerung ist nicht gesetzt, so wird das Flag für die Verzögerung gesetzt - siehe Feld 26. Der Temperaturkorrekturwert bleibt auf dem alten Wert und kann frühestens mit dem nächsten Messwert wieder verändert werden, falls dessen Druckoffset größer ist als der aktuelle Druckoffset.

Nach dem Setzen/Rücksetzen des Flags für die Verzögerung wird anschließend mit dem alten Temperaturkorrekturwert der aktuelle Temperaturmesswert korrigiert.

Durch die Verzögerung der Übernahme des Temperaturkorrekturwertes soll vermieden werden, dass im Falle eines schleichenden Druckverlustes die erfindungsgemäße Temperaturkompensation den schleichenden Druckverlust durch ständiges Verkleinern der Temperaturabweichung kompensiert, so dass die Temperaturkompensation mit Annäherung der Druckmesswerte an die Referenz-Isochore die Berechnung einer immer kleineren Temperaturabweichung zur Folge hätte, was der Zielsetzung der vorliegenden Erfindung zuwider laufen würde.

## Patentansprüche

1. Verfahren zur Temperaturkompensation von Druckmesswerten in einem Reifendruckkontrollsystem eines Fahrzeuges, welches Räder mit Luftreifen hat, in welchen ein unter dem Reifen angeordneter Drucksensor die Druckmesswerte und ein unter dem Reifen angeordneter Temperatursensor Temperaturmesswerte gewinnt und die Druckmesswerte unter Berücksichtigung der bekannten Proportionalität zwischen dem Druck und der Temperatur bei als konstant angenommenem Volumen der Luft im Reifen auf eine vorgegebene Referenztemperatur bezogen werden, wobei bei den aktuell im Reifen gemessenen Temperaturen eine Abweichung der Temperatur des Temperatursensors von der mittleren Lufttemperatur im Reifen abgeschätzt wird und mit der abgeschätzten Temperaturabweichung als Korrekturwert die aktuellen Temperaturmesswerte korrigiert werden, **dadurch gekennzeichnet, dass** der Korrekturwert der Temperatur aus der Entwicklung der Druckmesswerte und der Temperaturmesswerte abgeleitet wird, die beobachtet wird, wenn die Räder des Fahrzeuges aus einem Zustand der Ruhe und des thermischen Gleichgewichtes heraus in einen Fahrzustand überführt und die Druckmesswerte und Temperaturmesswerte mit einer vorgegebenen Referenz-Isochore für den Reifendruck des betreffenden Rades verglichen werden.

2. Verfahren nach Anspruch 1, **dadurch gekennzeichnet, dass** die Korrekturwerte der gemessenen Temperatur von dem Abstand der Druckmesswerte von der Referenz-Isochore abgeleitet werden, insbesondere von der Abweichung der Druckmesswerte von der Referenz-Isochore nach oben hin.

3. Verfahren nach einem der vorstehenden Ansprüche, **dadurch gekennzeichnet, dass** dann, wenn im Reifen bei der Referenztemperatur ein Solldruck herrscht, eine Soll-Isochore festgelegt wird, welche bei der Referenztemperatur den Solldruck angibt.

4. Verfahren nach Anspruch 3, **dadurch gekennzeichnet, dass** nach dem Einstellen des Solldrucks im Reifen die Soll-Isochore als Referenz-Isochore ausgewählt wird.

5. Verfahren nach einem der vorstehenden Ansprüche, **dadurch gekennzeichnet, dass** als Korrekturwert der gemessenen Temperatur die Abweichung des Temperaturmesswertes von jener Temperatur gewählt wird, welche sich für jenen Druckmesswert, welcher zum Temperaturmesswert gehört, aus der Referenz-Isochore ergibt.

6. Verfahren nach Anspruch 5, **dadurch gekennzeichnet, dass** bei der Beobachtung der Druckmesswerte und Temperaturmesswerte, ausgehend von einem Rad, welches sich in einem thermischen Gleichgewicht befindet, neue Korrekturwerte der gemessenen Temperatur gebildet werden, solange die Abstände der Druckmesswerte von der Referenz-Isochore größer werden.

7. Verfahren nach Anspruch 6, **dadurch gekennzeichnet, dass** dann, wenn die Abweichung der Druckmesswerte von der Referenz-Isochore nicht mehr steigt, für weitere Messungen der letzte Korrekturwert der Temperatur beibehalten wird.

8. Verfahren nach Anspruch 7, **dadurch gekennzeichnet, dass** bei einem erneuten Ansteigen der Abweichung der Temperaturmesswerte von der Referenz-Isochore ein neuer Korrekturwert für die gemessene Temperatur erst dann wieder gebildet wird, wenn sich der Anstieg des Abstandes der Druckmesswerte von der Referenz-Isochore über eine vorgegebene Anzahl von aufeinanderfolgenden Messungen fortsetzt und/oder wenn der Anstieg der Abweichung der Druckmesswerte von der Referenz-Isochore ein vorgegebenes Ausmaß übersteigt.

9. Verfahren nach Anspruch 8, **dadurch gekennzeichnet, dass** ein neuer Korrekturwert der gemessenen Temperatur erst dann wieder gebildet wird, wenn wenigstens drei aufeinanderfolgende Messungen einen erneuten Anstieg der Abweichung der Druckmesswerte von der Referenz-Isochore zeigen und/oder wenn der erneute Anstieg des Abstandes der Druckmesswerte von der Referenz-Isochore 150 mbar übersteigt.

10. Verfahren nach einem der vorstehenden Ansprüche, **dadurch gekennzeichnet, dass** der Korrekturwert der gemessenen Temperatur auf einen vorgegebenen Wertebereich beschränkt wird.

11. Verfahren nach Anspruch 10, **dadurch gekennzeichnet, dass** der Wertebereich für den Korrekturwert der gemessenen Temperatur nach oben hin auf 15° C beschränkt wird.

12. Verfahren nach Anspruch 10, **dadurch gekennzeichnet, dass** der Wertebereich für den Korrekturwert der gemessenen Temperatur nach unten hin auf 2° C bis 3° C beschränkt wird.

13. Verfahren nach einem der vorstehenden Ansprüche, **dadurch gekennzeichnet, dass** angenommen wird, dass sich ein Rad in einem thermischen Gleichgewicht befindet, wenn die Zündung des Fahrzeuges länger als eine vorgegebene Zeitspanne ausgeschaltet ist und/oder der Temperaturmesswert einen vorgegebenen Grenzwert unterschreitet.

14. verfahren nach Anspruch 13, **dadurch gekennzeichnet, dass** der Grenzwert der Temperatur bei 35° C gewählt wird.

15. Verfahren nach einem der Ansprüche 1 bis 12, **dadurch gekennzeichnet, dass** zusätzlich die Lufttemperatur außerhalb des Reifens gemessen und angenommen wird, dass sich ein Rad in einem thermischen Gleichgewicht befindet, wenn die Zündung des Fahrzeuges länger als eine vorgegebene Zeitspanne ausgeschaltet ist und/oder der Abstand der im Reifen gemessenen Temperatur von der außerhalb des Reifens gemessenen Temperatur eine vorgegebenen Schwelle unterschreitet.

16. Verfahren nach Anspruch 13 oder 15, **dadurch gekennzeichnet, dass** das Zeitintervall 30 Minuten beträgt.

17. Verfahren nach Anspruch 15, **dadurch gekennzeichnet, dass** die Temperaturschwelle 10° C beträgt.

18. Verfahren nach einem der vorstehenden Ansprüche, **dadurch gekennzeichnet, dass** dann, wenn die Räder des Fahrzeuges nach einer Fahrt wieder in einen Zustand thermischen Gleichgewichtes gelangt sind, bei einem erneuten Start des Fahrzeuges eine Hilfs-Isochore dann gebildet wird, wenn ein oder mehrere im Zustand des thermischen Gleichgewichtes gewonnene Druckmesswerte unterhalb der bisher verwendeten Referenz-Isochore liegen, wobei die Hilfs-Isochore so gewählt wird, dass der eine oder die mehreren Druckmesswerte, welche im Zustand des thermischen Gleichgewichtes gewonnen wurden, auf der Hilfs-Isochore liegen, und dass die Hilfs-Isochore als neue Referenz-Isochore verwendet wird.

19. Verfahren nach Anspruch 18, **dadurch gekennzeichnet, dass** die Hilfs-Isochore die bisherige Referenz-Isochore ersetzt, ausgenommen jedoch die Soll-Isochore, welche als Soll-Isochore beibehalten wird.

20. Verfahren nach einem der vorstehenden Ansprüche in Verbindung mit Anspruch 3, **dadurch gekennzeichnet, dass** die temperaturkompensierten Druckmesswerte mit der Soll-Isochore verglichen werden, um festzustellen ob der Abstand der Druckmesswerte von der Soll-Isochore einen Grenzwert überschreiten, und dass bei Überschreiten des Grenzwertes eine Meldung erfolgt.

21. Verfahren nach Anspruch 20, **dadurch gekennzeichnet, dass** dann, wenn bei einem Rad im Stillstand einer oder mehrere Druckmesswerte gewonnen werden, deren Abstand von der Soll-Isochore nach oben hin einen vorgegebenen Grenzwert überschreitet, die Soll-Isochore durch eine neue Soll-Isochore ersetzt wird, auf welcher der oder die Druckmesswerte liegen, deren Abstand von der bisherigen Soll-Isochore den vorgegebenen Grenzwert überschritten haben.

22. Verfahren nach Anspruch 21, **dadurch gekennzeichnet, dass** die Soll-Isochore nur auf Veranlassung einer Person, insbesondere des Fahrers, durch eine neue Soll-Isochore ersetzt wird.

23. Verfahren nach Anspruch 20, 21 oder 22, **dadurch gekennzeichnet, dass** der Grenzwert ca. 700 mbar beträgt.

24. Verfahren nach einem der vorstehenden Ansprüche, **dadurch gekennzeichnet, dass** als Referenztemperatur die Temperatur der Umgebungsluft gewählt wird.

## Claims

1. Method for temperature compensation of measured pressure values in a tire pressure control system of a vehicle, which is equipped with wheels with pneumatic tires in which a pressure sensor arranged below the tire obtains the pressure values and a temperature sensor arranged below the tire obtains temperature values and the measured pressure values are referred to a predefined reference temperature, giving due consideration to the known proportionality between the pressure and the temperature at a volume of air in the tire which is assumed to be constant, wherein an offset of the temperature supplied by the temperature sensor from the mean air temperature prevailing in the tire is estimated for the temperatures measured at any time in the tire, and the currently measured temperature values are corrected using the estimated temperature offset as a correction value, **characterized in that** the correction value of the temperature is derived from the development of the measured pressure values and the measured temperature values which is observed when the wheels of the vehicle are transferred from a state of rest and of thermal balance to a running condition and the measured pressure values and the measured temperature values are compared with a predefined reference isochore for the tire pressure of the respective wheel.

2. The method as defined in Claim 1, **characterized in that** the correction values of the measured temperature are derived from the offset of the measured pressure values relative to the reference isochore, especially from the offset of the measured pressure values from the reference isochore in upward direction.

3. The method as defined in any of the preceding claims, **characterized in that** a nominal isochore, indicating the nominal pressure at the reference temperature, is determined when a nominal pressure prevails in the tire at the reference temperature.

4. The method as defined in Claim 3, **characterized in that** once the nominal pressure has been adjusted in the tire, the nominal isochore is selected as the reference isochore.

5. The method as defined in any of the preceding claims, **characterized in that** the offset of the measured temperature value from the temperature which is derived from the reference isochore for the measured pressure value associated to the measured temperature value is used as a correction value of the temperature.

6. The method as defined in Claim 5, **characterized in that** while observing the measured pressure values and the measured temperature values, starting out from a wheel in a state of thermal balance, new correction values of the measured temperature are formed so long as the offset of the measured pressure values from the reference isochore continues to increase.

7. The method as defined in Claim 6, **characterized in that** once the offset of the measured pressure values from the reference isochore no longer increases, the last correction value of the temperature is maintained for further measurements.

8. The method as defined in Claim 7, **characterized in that** when the offset of the measured temperature values from the reference isochore starts to rise again, a new correction value of the temperature is formed only when the increase of the offset of the measured pressure values from the reference isochore continues over a predetermined number of successive measurements and/or when the increase of the offset of the measured pressure values from the reference isochore exceeds a predetermined value.

9. The method as defined in Claim 8, **characterized in that** a new correction value of the temperature is formed only when at least three successive measurements show that the offset of the measured pressure values from the reference is rising again and/or when the renewed increase of the offset of the measured pressure values from the reference isochore exceeds 150 mbar.

10. The method as defined in any of the preceding claims, **characterized in that** the correction value of the measured temperature is limited to a predetermined value range.

11. The method as defined in Claim 10, **characterized in that** the range for the correction value of the temperature is limited to 15° Celsius in upward direction.

12. The method as defined in Claim 10, **characterized in that** the range for the correction value of the temperature is limited to 2° Celsius to 3° Celsius in downward direction.

13. The method as defined in any of the preceding claims, **characterized in that** it is assumed that a wheel is in a state of thermal balance when the ignition system of the vehicle has been switched off longer than for a given period of time and/or when the measured temperature value has dropped below a predetermined threshold value.

14. The method as defined in Claim 13, **characterized in that** the threshold value of the temperature is selected to be 35° Celsius.

15. The method as defined in any of Claims 1 to 12, **characterized in that** the air temperature outside the tire is additionally measured and that it is assumed that a wheel is in a state of thermal balance when the ignition system of the vehicle has been switched off longer than for a given period of time and/or when the offset of the temperature measured in the tire from the temperature measured outside the tire has dropped below a predetermined threshold value.

16. The method as defined in Claim 13 or 15, **characterized in that** the time interval is 30 minutes.

17. The method as defined in Claim 15, **characterized in that** the temperature threshold value is 10° Celsius.

18. The method as defined in any of the preceding claims, **characterized in that** when the wheels of the vehicle have returned to a state of thermal balance after the end of a trip, an auxiliary isochore is formed at the time of the next start of the vehicle if one or more of the pressure values, measured during the state of thermal balance, are found to lie below the reference isochore used before, in which case the auxiliary isochore is selected to ensure that the one or more pressure values measured during the state of thermal balance come to lie on the auxiliary isochore, and that the auxiliary isochore is used as a new reference isochore.

19. The method as defined in Claim 18, **characterized in that** the auxiliary isochore replaces the previous reference isochore, with the exception of the nominal isochore which is preserved as the nominal isochore.

20. The method as defined in any of the preceding claims in combination with Claim 3, **characterized in that** the temperature-compensated measured pressure values are compared with the nominal isochore in order to determine if the offset of the measured pressure values from the nominal isochore exceeds a threshold value, and that a warning is issued when the threshold value is exceeded.

21. The method as defined in Claim 20, **characterized in that** if one or more measured pressure values, whose offset from the nominal isochore exceeds a predetermined threshold value in upward direction, are obtained for a wheel in stationary condition, the nominal isochore is replaced by a new nominal isochore which passes through the one or more measured pressure values whose offset from the previous nominal isochore has exceeded the predetermined threshold value.

22. The method as defined in Claim 21, **characterized in that** the nominal isochore is replaced by a new nominal isochore only upon initiation by a person, especially by the driver.

23. The method as defined in Claim 20, Claim 21 or Claim 22, **characterized in that** the threshold value is approximately 700 mbar.

24. The method as defined in any of the preceding claims, **characterized in that** the temperature of the ambient air is selected as the reference temperature.

## Revendications

1. Procédé de compensation de température pour valeurs de mesure de pression dans un système de contrrôle de pression des pneumatiques d'un véhicule, comprenant des roues munies de pneumatiques, dans lesquelles un capteur de pression disposé sous le pneu recueille les valeurs de mesure de pression et un capteur de température disposé sous le pneu recueille les valeurs de mesure de température et les valeurs de mesure de pression sont mises en relation à une température de référence prédéterminé en tenant compte de la proportionnalité connue entre la pression et la température avec un volume d'air supposé constant dans le pneu, dans lequel pour les températures courantes mesurées dans le pneu on déduit de la température d'air médiane température d'air un écart de température au niveau du capteur de température et l'on compare les valeurs de mesure de température courantes à l'écart de température évalué comme valeur de correction, **caractérisé en ce que** l'on déduit la valeur de correction de température du développement des valeurs de mesure de pression et des valeurs de mesure de température, que l'on observe le moment auquel les roues du véhicule passent de l'état de repos et de l'équilibre thermique à un état de roulage et que l'on compare les valeurs de mesure de pression et les valeurs de mesure de température à un isochore de référence prédéterminé pour la pression de pneu de la roue correspondante.

2. Procédé selon la revendication 1, **caractérisé en ce que** l'on déduit de l'écart des valeurs de mesure de pression par rapport à l'isochore de référence les valeurs de correction de la température mesurée, en particulier de l'écart des valeurs de mesure de pression par rapport à l'isochore de référence vers le haut.

3. Procédé selon l'une des revendications précédentes, **caractérisé en ce que** l'on définit un isochore de consigne lorsque règne une pression de consigne dans le pneu à la température de référence, lequel isochore indique la pression de consigne à la température de référence.

4. Procédé selon la revendication 3, **caractérisé en ce que** l'on choisit l'isochore de consigne comme isochore de référence après avoir réglé la pression de consigne.

5. Procédé selon l'une des revendications précédentes, **caractérisé en ce que** l'on choisit comme valeur de correction de la température mesurée l'écart de la valeur de mesure de température par rapport à la température que l'on obtient pour la valeur de mesure de pression appartenant à la valeur de mesure de température, et ce à partir de l'isochore de référence.

6. Procédé selon la revendication 5, **caractérisé en ce que** lorsque l'on observe les valeurs de mesure de pression et les valeurs de mesure de température, à partir d'une roue se trouvant à l'équilibre thermique, l'on constitue de nouvelles valeurs de correction de la température mesurée, à condition que les écarts des valeurs de mesure de pression augmentent par rapport à l'isochore de référence.

7. Procédé selon la revendication 6, **caractérisé en ce que** lorsque l'écart des valeurs de mesure de pression n'augmente plus par rapport à l'isochore de référence, l'on conserve la dernière valeur de correction de température pour effectuer les mesure suivantes.

8. Procédé selon la revendication 7, **caractérisé en ce que** l'on redétermine une nouvelle valeur de correction pour la température mesurée, en présence d'une nouvelle progression de l'écart des valeurs de mesure de température par rapport à l'isochore de référence, uniquement lorsque la progression de l'écart des valeurs de mesure de pression par rapport à l'isochore de référence continue au-delà d'un nombre prédéterminé de mesures consécutives et/ou lorsque la progression de l'écart des valeurs de mesure de pression par rapport à l'isochore de référence dépasse une amplitude prédéfinie.

9. Procédé selon la revendication 8, **caractérisé en ce que** l'on redétermine une nouvelle valeur de correction pour la température mesurée uniquement si au moins trois mesures consécutives montrent une nouvelle progression de l'écart des valeurs de mesure de pression par rapport à l'isochore de référence et/ou lorsque la nouvelle progression de l'écart des valeurs de mesure de pression par rapport à l'isochore de référence dépasse 150 mbar.

10. Procédé selon l'une des revendications précédentes, **caractérisé en ce que** l'on réduit à une plage de valeurs prédéterminée la valeur de correction pour la température mesurée.

11. Procédé selon la revendication 10, **caractérisé en ce que** l'on limite vers le haut à 15°C la plage de valeurs appliquée à la valeur de correction pour la température mesurée.

12. Procédé selon la revendication 10, **caractérisé en ce que** l'on limite vers le bas à 2-3°C la plage de valeurs appliquée à la valeur de correction pour la température mesurée.

13. Procédé selon l'une des revendications précédentes, **caractérisé en ce que** l'on suppose qu'une roue se trouve à l'équilibre thermique lorsque l'allumage du véhicule reste inactif au-delà d'un laps de temps prédéterminé et/ou que la valeur de mesure de température tombe au-dessous d'une valeur limite prédéterminée.

14. Procédé selon la revendication 13, **caractérisé en ce que** l'on choisit 35°C comme valeur limite de température.

15. Procédé selon l'une quelconque des revendications 1 à 12, **caractérisé en ce qu'**en outre l'on mesure la température d'air à l'extérieur du pneu et que l'on suppose qu'une roue se trouve à l'équilibre thermique lorsque l'allumage du véhicule reste inactif au-delà d'un laps de temps prédéterminé et/ou l'écart de la température mesurée dans le pneu par rapport à la température mesurée à l'extérieur du pneu tombe au-dessous d'un seuil prédéterminé.

16. Procédé selon la revendication 13 ou 15, **caractérisé en ce que** l'intervalle de temps est de 30 minutes.

17. Procédé selon la revendication 15, **caractérisé en ce que** le seuil de température est de 10°C.

18. Procédé selon l'une des revendications précédentes, **caractérisé en ce que** lorsque les roues du véhicule retrouvent un état d'équilibre thermique après un trajet, on obtient un isochore auxiliaire après un nouveau démarrage du véhicule, lorsqu'une ou plusieurs valeurs de mesure de pression obtenues à l'état d'équilibre thermique sont inférieures à l'isochore de référence utilisée jusqu'alors, tandis que l'on sélectionne l'isochore auxiliaire de telle sorte que la ou lesdites valeurs de mesure de pression que l'on a obtenues à l'état d'équilibre thermique correspondent à l'isochore auxiliaire et **en ce que** l'on utilise l'isochore auxiliaire comme nouvel isochore de référence.

19. Procédé selon la revendication 18, **caractérisé en ce que** l'isochore auxiliaire remplace l'isochore de référence utilisé jusqu'alors, à l'exception cependant de l'isochore de consigne, que l'on conserve comme isochore de consigne.

20. Procédé selon l'une des revendications précédentes en combinaison avec la revendication 3, **caractérisé en ce que** l'on compare les valeurs de mesure de pression compensées en température à l'isochore de consigne pour déterminer si l'écart des valeurs de mesure de pression par rapport à l'isochore de consigne dépasse une valeur limite, et **en ce que** l'on reçoit un message en cas de dépassement de la valeur limite.

21. Procédé selon la revendication 20, **caractérisé en ce que** lorsque l'on obtient une ou plusieurs valeurs de mesure de pression avec une roue immobilisée dont l'écart par rapport à l'isochore de consigne vers le haut dépasse une valeur limite prédéterminée, l'isochore de consigne est remplacé par un nouvel isochore de consigne auquel correspondent la ou les valeurs de mesure de pression dont l'écart par rapport à l'isochore de consigne utilisé jusqu'alors a dépassé la valeur limite prédéterminée.

22. Procédé selon la revendication 21, **caractérisé en ce que** l'isochore de consigne n'est remplacé par un nouvel isochore de consigne qu'à l'initiative d'une personne, en particulier du conducteur.

23. Procédé selon la revendication 20, 21 ou 22, **caractérisé en ce que** la valeur limite est d'environ 700 mbar.

24. Procédé selon l'une des revendications précédentes, **caractérisé en ce que** l'on choisit la température de l'air environnant comme température de référence.
